# EUROPEAN PATENT APPLICATION

(11) **EP 4 477 088 A1**
(43) Date of publication of application: **18.12.2024**
(21) Application number: 24181317.9
(22) Date of filing: 11.06.2024
(51) Int. Cl.: A23G 1/30, A23G 1/54, A23G 3/34, A23G 3/54, A23P 20/10

(54) **COATED CONFECTIONERY PRODUCT**

(30) Priority: 16.06.2023 IT 202300012483
(71) Applicant: SOREMARTEC S.A., 2633 Senningerberg (LU)
(72) Inventor: VARALDO, Luca, I-12051 ALBA (Cuneo) (IT); BABIN, Helene Anne, I-12051 ALBA (Cuneo) (IT); CHIAVARINO, Aldo, I-12055 DIANO D'ALBA (Cuneo) (IT); GUASTALLI, Romilbert, I-12051 ALBA (Cuneo) (IT)
(74) Representative: Rambelli, Paolo

(57) **Abstract**

Confectionery product comprising a shell (2) optionally containing a filling (4) which is fluid or flowable at ambient temperature and a coating (6) which is solid at ambient temperature, which coating is deposited at least partially covering the shell and is capable of melting at a temperature of 28°C or more, characterized in that it comprises an outer coating (8) anchored to the solid coating (6), said outer coating comprising a mixture of chocolate grains and of grains consisting of a sugar- and protein-based confectionery substance which is solid, expanded and water-soluble, having organoleptic features corresponding or equivalent to those of a traditional meringue.

## Description

The present invention relates generally to confectionery products with an outer coating.

In particular, the invention relates to a confectionery product of the type comprising a shell possibly including an accessory or a filling, preferably a filling that is fluid or flowable at ambient temperature and a coating layer, applied at least partially, but preferably totally, covering the shell, formed from an edible material, such as chocolate or the like, which is solid at ambient temperature and capable of melting at a temperature of about 28°C or more.

The invention has been developed with particular reference to bite-sized products, i.e., to products also known by the terms "bites" or "chocolate bites" which, typically, denote products that may be consumed in one bite; however, the invention is not intended to be limited to this size.

In view of the small size and to facilitate consumption, these products are for the most part packaged in bulk, i.e., in sealed and preferably resealable bags containing a plurality of products, rather than in an individual wrapper for each product.

In this field of products, industrial producers are conducting ongoing research for new products having improved organoleptic features, in terms of taste and palatability and, at the same time, an appearance of artisan confectionery.

A particularly desirable feature from the standpoint of palatability is the meltability of the product, which is mostly generated by the nature of the filling, particularly when accompanied by features of crunchiness, which are generally imparted by the nature of the shell and/or by inclusions inside the shell, insofar as the contrast between these features is particularly palatable and appealing to the consumer.

Since the product's first impression of palatability is determined by its surface features, it would be particularly desirable to achieve meltability qualities even for the outermost layer or layers of the product. In this context, chocolate grains would be a particularly desirable component; however, in known products their use is generally limited to the role of inclusion, due to the difficulties in obtaining a quickly melting grain, as well as the fact that their presence on the surface causes adhesion or agglomeration between the products, for example when said products are packaged in bulk in a bag, according to traditional packaging or in any case when they are made to bump against each other, and any thermal changes during transport and handling of the products or packages containing the products.

One object of the invention is to provide a confectionery product of the aforementioned type which has improved organoleptic and handling features for the consumer or during packaging and/or transport. Another object of the invention is to provide a coated confectionery product which may be packaged in bulk without significant risk of deterioration.

Another object of the invention is to provide a product with improved shelf-life features.

### Summary of the invention

The aforementioned objects and others that will become apparent from the following description are achieved by a confectionery product having the features defined in the claims below and characterized in that it comprises an outer covering comprising a mixture of chocolate grains and of grains of a solid confectionery substance which has a foamed cellular (or alveolar) or porous structure and is solid and readily soluble in water, comprising sugar and edible proteins, such as albumin and/or lactalbumin, hereinafter defined by the term "meringue" or as an equivalent to traditional meringue.

Another subject matter of the invention relates to the use of a mixture comprising chocolate grains and meringue grains, as defined below, as an outer covering of a confectionery product such as a praline or the like.

Another subject matter of the invention is a packaging in a bag including a plurality of confectionery products according to the invention, arranged in the bag in bulk, preferably without individual wrappers.

Further features and advantages of the container according to the invention will become evident from the following detailed description, made with reference to the accompanying drawings, provided by way of non-limiting example.

### Summary of drawings

In the accompanying drawings:
- Fig. 1 is a perspective view, partially split, of a praline which constitutes an embodiment of the invention;
- Fig. 2 is a view in axial section of the praline of Fig. 1; and
- Fig. 3a and 3b are microscopic photographs (35X magnification) of a mixture of chocolate grains and meringue grains applied as an outer coating to a praline in a ratio of 60% chocolate grains and 40% meringue grains (Fig. 3a) and 90% chocolate grains and 10% meringue grains (Fig. 3b), respectively.

### Detailed description of the invention

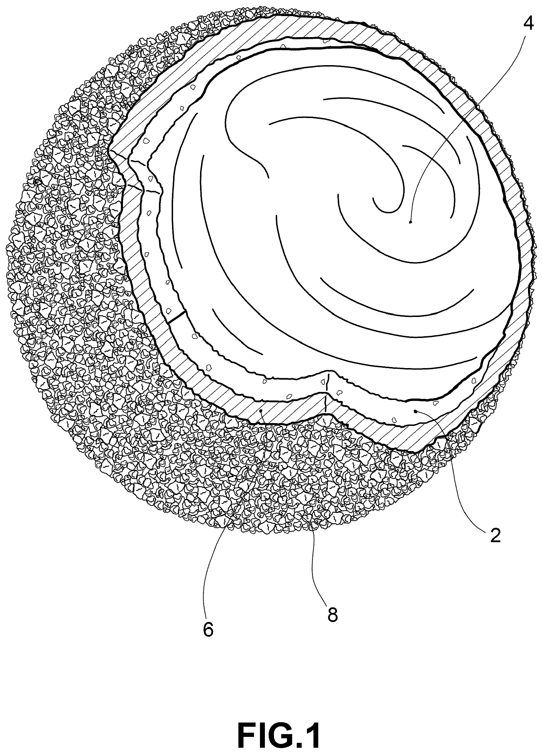

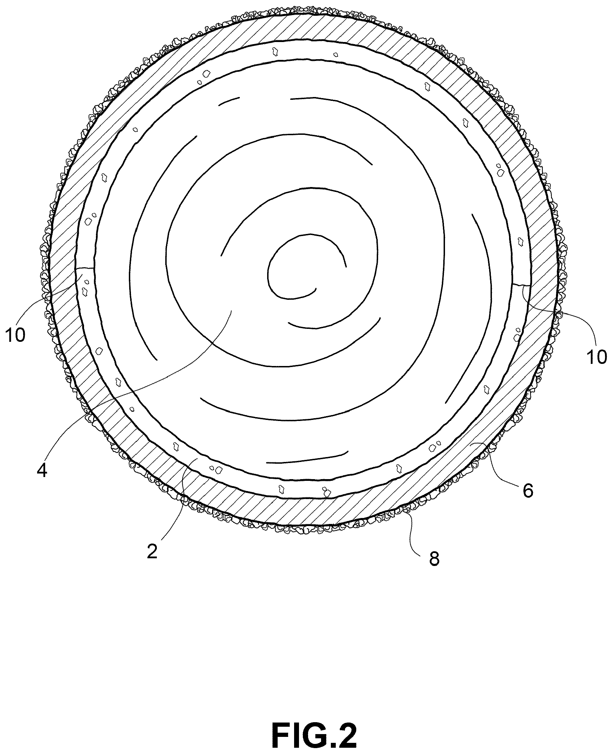

Fig. 1 and 2 show a confectionery product, in the form of a praline, according to a preferred embodiment of the invention.

As already mentioned, the invention relates in particular to small products, having for example a maximum size or diameter of 18 to 27 mm, with a weight of about 2-5 g for each product, although these values are not to be understood as binding. The shape of the product may also vary widely, although a substantially spherical or ovoid shape is generally preferred.

The structure of the product comprises a shell 2, an optional filling 4, inside the shell, a coating or enrobing layer 6 applied to the shell and an outer coating 8 comprising a mixture of chocolate grains and meringue grains (as defined below).

The shell 2 is a substantially closed body adapted to confine a filling or an accessory therein, formed from an edible material, preferably with a crunchy consistency, i.e. having a certain resistance to chewing. Preferably, the shell is formed from two half shells coupled along their respective annular mouth edges 10 (Fig. 2); in this context, the reference to two half shells comprises the case wherein one of the two half shells is concave in shape, having a containment function, and the other is flattened or substantially flat in shape, with the function of a closing element of the mouth of the other half shell.

Preferably, the shell is formed from two half shells obtained by forming in a mold and baking a dough or batter for baked products, in particular a wafer batter or a bakery dough, comprising flour or a mixture of flours and water, optionally with the addition of ingredients such as milk, emulsifiers such as lecithin, raising agents, and edible fats or oils.

By way of example, a typical formulation of a batter is described in EP 1 647 190 and comprises the following ingredients:
- water: 40-60% by weight,
- flour: 30-45% by weight,
- sugar: 0.5-2% by weight and optionally
- cocoa solids: 0.5-2% by weight,
- edible fats: 1.5-2.5% by weight,
- milk, preferably low-fat: 0.5-1.5% by weight,
- and further ingredients selected from sodium bicarbonate, salt, ammonium carbonate, and soy lecithin.

The wafer shells or in general those obtained from a dough for baked products preferably have annular mouth surfaces or peripheral edges (in the case of a flattened half shell) with a so-called "finished" surface, i.e., a surface having a high degree of surface finish substantially free from macropores, i.e., a smooth surface similar to a surface leather, resulting from baking the batter or dough in contact with the surfaces of the forming half molds. Wafer shells having these features may be produced for example using the methods described in US 2004/137123 or EP 2506718 B1.

Preferably, when the shell 2 is formed from two half shells obtained from a wafer batter or dough for baked products, these half shells are coupled to each other and welded (following the introduction of the filling 4) by moistening the coupling surfaces, for example according to the methods described in EP 1 647 190 and EP 2 804 483; however, these half shells may also be welded using an edible cementing material.

In one embodiment, the shell 2 may also consist of two chocolate half shells, coupled and welded along the annular mouth edges, i.e., or by a chocolate half shell and a wafer half shell; also in this case, the term "half shell" includes the case wherein one of the two half shells is substantially flat or flattened with a lid function.

The term "chocolate" or "milk chocolate" in this description is preferably to be understood as a product meeting the definitions adopted in Directive 2003/36/EC, but is not to be understood as limited to these definitions.

Preferably, the shell 2 includes a filling 4 or an accessory which may be a food or toy. The filling 4, when used and confined within the shell 2, is preferably an edible mass which is fluid or flowable at ambient temperature, capable of being dosed within the shell (or rather one of the two half shells) at a temperature from 25 to 32°C. Typically, the filling comprises vegetable oils, sugar, milk (or milk proteins) and, optionally, cocoa and/or hazelnut paste and/or, more generally, nut paste and/or roasted cereal powder. Preferably, the filling is an anhydrous or substantially anhydrous mass (water content less than 2% by weight).

Generally, the filling is produced and refined at a particle size range wherein at most 10% by weight of the mass has particle sizes greater than 30 microns and 0% by weight greater than 75 microns. However, solid inclusions may be introduced into the refined filling mass, such as biscuit grains, nuts, meringues, chocolate, etc. and/or roasted cereals, to provide a crunchiness feature to the mass that is per se meltable.

The coating 6 is a coating which is solid at ambient temperature (25°C) and is deposited to cover the shell at least partially or preferably completely; the coating 6 is formed from an edible composition capable of melting at a temperature above or equal to about 28°C.

Typically, a chocolate coating is used, in the sense indicated above; however, particularly in this context, the term "chocolate" is to be understood as including compositions that do not meet the definition of the aforementioned European Directive and may, for example, consist of a compound coating.

The coating 6 is applied to the shell by enrobing and is generally tempered and dosed at a temperature of about 27-31°C ± 1°C.

According to the invention, the outermost layer of the product comprises a mixture of chocolate grains and grains formed from a solid confectionery substance which has a foamed cellular or porous structure and is soluble in water, comprising sugar and proteins, hereinafter referred to as "meringue".

The aforesaid solid and foamed confectionery substance may be a traditional meringue, i.e. a heavily aerated mass obtained by consolidating, generally by heat treatment, a liquid/foamed mass (constituting a precursor of the final product) comprising a mixture of fresh or dehydrated egg whites, sugar, and possibly starch and water, generally with added flavors. This liquid precursor is currently referred to in the food industry as "meringue-foamed mixture."

The meringue-foamed mixture may also comprise emulsifiers (e.g. monoglycerides) and flavor enhancers such as cocoa, milk, and hazelnut paste. In a preferred embodiment, a meringue is used containing about 25-30% by weight of hazelnut paste, which gives the grains a bronzed coloring, similar to that of milk chocolate, which, as indicated below, is a preferred choice for the chocolate grains.

In a preferred embodiment, the aforesaid foamed confectionery substance is obtained from a mixture comprising milk proteins, particularly lactalbumin, starch, preferably wheat starch, chemical leavening agents, in particular ammonium bicarbonate and sugar, in particular ultrafine sugar or powdered sugar, and has organoleptic features, particularly in terms of crunchiness, brittleness or consistency, texture, and taste corresponding or equivalent to traditional meringue. Also in this embodiment, this mixture may preferably comprise cocoa and/or hazelnut paste and possibly water, which is used in the preparation step and then substantially removed during baking.

By way of example, a preferred formulation comprises the following ingredients, expressed as a percentage by weight.

| | MIN | MAX |
|---|---|---|
| Hazelnut paste | 25 | 35 |
| Powdered sugar | 45 | 60 |
| Demineralized water | 0 | 2 |
| Wheat starch | 5 | 10 |
| Milk protein | 2 | 7 |
| Cocoa | 0 | 5 |
| Ammonium bicarbonate | 0 | 2 |

In the context of the present invention, the term "meringue" is used both with reference to traditional meringue and with reference to the composition described above, which differs from traditional meringue due to the absence of egg whites and the use of chemical leavening agents.

Traditional grains of meringue may be obtained by conventional techniques wherein the foam is cast or extruded onto a support, usually composed of a motorized belt, so as to form a filiform bead on the support; the filiform mass thus obtained is fed inside an oven so as to bake preferably at a temperature not exceeding 60°C, thus causing the consolidation of the meringue.

In the case of a meringue equivalent, obtained using chemical leavening agents, it is understood that the formation of a foamed structure is obtained during baking.

The consolidated meringue mass thus obtained is ultimately sent to a shredding station, for example comprising rotating bodies such as counter-rotating circular blades; the consolidated meringue mass is thus shredded, resulting in grains that, according to a feature of the invention, are screened to a size (understood as a screening size) preferably of between 0.3 and 2.5 mm, preferably from 0.4 to 1.6 mm.

The grains thus obtained are formed from granules with a strongly irregular appearance characterized by a high surface porosity with open-pore formations caused by the baking process.

However, a baking process in an alveolar mold, as described in WO 2006/131811 by the same Applicant, may also be used for the production of the grains, which process provides meringue granules with a compact, i.e., closed-pore, external surface.

The chocolate grains, used as part of the invention, preferably have a particle size (screening size) of 0.3 to 2.5 mm, more preferably from 0.4 to 1.6 mm. Preferably they are obtained from a milk chocolate preferably comprising flavorings, such as hazelnut flavor. In the production process, the chocolate is tempered to have the best consistency and molded into cubes (for example with dimensions of about 20X20X20 mm) to then be kept in refrigerated conditions preferably at a temperature of 2 to 10°C, preferably 4±2°C for a minimum time of 24 hours, to allow for complete crystallization and consolidation. The cubes may then be introduced into a centrifugal grating machine to obtain a granule which is ultimately screened to the preferred dimensions indicated above.

In particular, the production process of the chocolate grains comprises the operations of:
- preparing the liquid chocolate,
- tempering (preferably at a temperature of 28.5°C),
- molding, preferably in cubes,
- storage of the chocolate thus obtained at a temperature between 2 and 10°C for a time of at least 24 hours,
- graining,
- screening at the caliber preferably from 300 to 2500 microns, and
- storage, preferably at 8-12°C.

The chocolate grains that do not meet the desired caliber are recovered and fed upstream of the process into the initial liquid chocolate.

The mixture of meringue and chocolate grains preferably comprises from 50% to 95% by weight of chocolate grains and from 5 to 50% by weight of meringue grains, more preferably from 5 to 20% of meringue grains and from 80 to 95% of chocolate grains.

In a preferred embodiment, a praline having dimensions (diameter) from 18 to 27 mm and a weight from 2.0 to 5.0 g has the following weight composition:
- filling: 42 to 45% ±2.0% by weight
- shell (wafer): 6 to 8% ±2.0% by weight
- coating (chocolate): 30 to 35% ±2.0% by weight
- mixture of chocolate grains (50%-90%) and meringue grains (50%-10%): 15-18% ±2.0% by weight.

The mixture of chocolate grains and meringue grains is applied as an outer coating 8 to the coating 6 due to the fact that the product is placed on a bed composed of said mixture of chocolate grains and meringue grains.

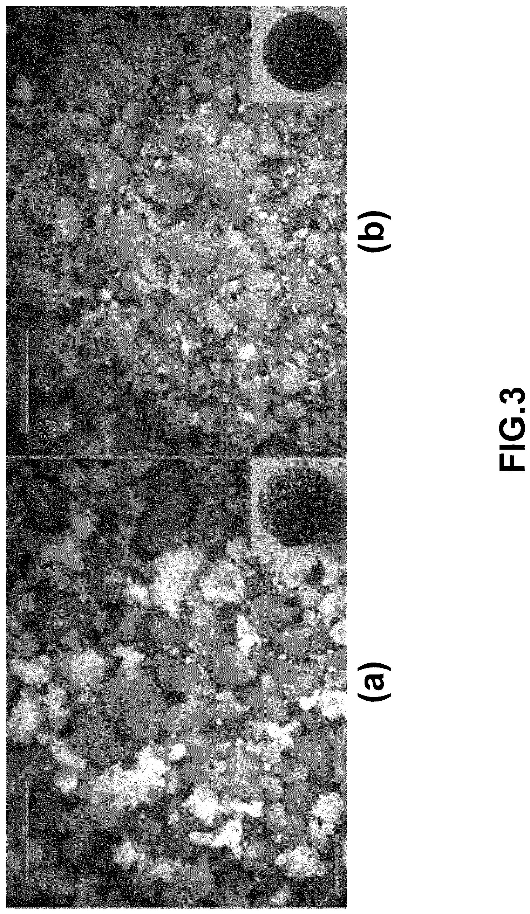

The grain mixture adhered to the coating 6 has an outer appearance, illustrated in Fig. 3, wherein a solid anchorage of the chocolate grains is visible, with most of the meringue grains present within the interspaces of the chocolate particles.

According to the objects of the invention, the use of a mixture of chocolate grains and meringue grains, as previously described, allows the products to be packaged in bulk in a preferably metallized, sealed, and optionally resealable bag, avoiding the agglomeration of the products, following their bumping together and/or thermal changes.

The detachment of the outer part of the grains with the formation, at the bottom of the bag, of an unwanted amount of waste grains is also avoided.

Furthermore, the mixture of chocolate and meringue grains allows, once the bag is opened, for the consumer to safely handle the product without it melting on contact; this feature allows a structural seal inside the casing of the packaging between the products up to a temperature of about 28°C or in a stress cycle of 18 to 28°C, which is the range normally used to validate the summer cycle in the European Union.

On the visual level, the mixture of chocolate and meringue grains, applied externally, gives the product a rough appearance, which simulates producing the pastry by hand, as the products are all different from each other; in particular, the product is aesthetically appreciable due to the contrast that may be found between the more chamfered chocolate grain particles, compared to the more crystalline meringue particles.

On the organoleptic and, in particular, palatability level, the presence of easily soluble meringue grains in contact with saliva liquids simultaneously results in an increased meltability of said coating, i.e., also of the chocolate grains.

The product according to the invention is crispy at the first bite, but quickly melts due to the mixture of chocolate and meringue grains that covers it, and, at the second bite, the filling, when used, having a high degree of creaminess, allows a real explosion of taste and sensory roundness, even during the entire after-taste period.

A further advantage relating to the use of the mixture of chocolate and meringue grains is that the external appearance maintains a constant coloration over time and, in particular, for the entire shelf-life of the product.

## Claims

1. A confectionery product comprising a shell (2), optionally containing a filling (4) which is fluid or flowable at ambient temperature, and a coating (6) which is solid at ambient temperature, which coating is deposited at least partially covering said shell and is capable of melting at a temperature of 28°C or more, **characterized in that** it comprises an outer coating (8) anchored to said solid coating (6), said outer coating comprising a mixture of chocolate grains and of grains comprising a sugar- and protein-based confectionery substance which has a cellular or porous structure and is solid, foamed and water-soluble, preferably having organoleptic features corresponding or equivalent to those of a traditional meringue.

2. Confectionery product according to claim 1, **characterized in that** said foamed substance is obtained from a mixture comprising milk proteins, sugar, starch, chemical leavening agents and optionally water.

3. Confectionery product according to claim 1, **characterized in that** said foamed substance is formed from a mixture comprising egg white, sugar and optionally starch and water.

4. Confectionery product according to claim 2 or 3, **characterized in that** said foamed substance is obtained from a mixture comprising, in addition, cocoa powder and/or hazelnut paste, and optionally flavorings.

5. Confectionery product according to any one of claims 1 to 4, **characterized in that** said grains of foamed substance comprise 25 to 35 % by weight of hazelnut paste.

6. Confectionery product according to claim 2, wherein said foamed substance comprises by percentage in weight:
- 25 to 35% hazelnut paste
- 45 to 60% icing sugar
- 0 to 2% demineralized water
- 5 to 10% wheat starch
- 2 to 7% milk protein
- 0 to 5% cocoa
- 0 to 2% ammonium bicarbonate,
where the weight percentages of the ingredients add up to 100%.

7. Confectionery product according to any one of claims 1 to 6, **characterized in that** said outer coating (8) comprises:
- 50 to 95% by weight of chocolate grains and
- 50 to 5% by weight of grains of said expanded substance.

8. Confectionery product according to any one of claims 1 to 7, **characterized in that** the grains of foamed substance have a size of 0.3 to 2.5 mm, preferably 0.4 to 1.6 mm.

9. Confectionery product according to any one of claims 1 to 8, **characterized in that** the chocolate grains have a size of 0.3 to 2.5 mm, preferably 0.4 to 1.6 mm.

10. Confectionery product according to any one of the preceding claims, **characterized in that** said shell (2) is formed from two half shells of wafer or obtained from a bakery dough, coupled and welded to each other along the respective annular mouth edges.

11. Confectionery product according to any one of claims 1 to 8, **characterized in that** it comprises a filling consisting of a substantially anhydrous edible mass, comprising vegetable oils, sugar, milk or milk proteins and optionally cocoa and/or hazelnut paste and/or, more generally, nut paste and/or roasted cereal powder.

12. Confectionery product according to any one of claims 1 to 11, **characterized in that** said coating (6), applied to cover the shell, is a chocolate coating.

13. Confectionery product according to any one of the preceding claims, **characterized in that** said chocolate grains comprise milk chocolate and are obtained by a process comprising tempering of the initially liquid chocolate, molding of the tempered chocolate with maturation for at least 24 hours and graining.

14. Use of a mixture of chocolate grains and of grains of a foamed, solid, water-soluble substance, as defined in claims 1 to 6, as an outer coating adhered to the surface of a coating of a confectionery product.

15. Use according to claim 14, **characterized in that** said mixture comprises from 50 to 95% by weight of chocolate grains and from 50 to 5% by weight of grains of said solid foamed substance.

16. Use according to claims 14 and 15, **characterized in that**:
- the chocolate grains have a size of 0.3 to 2.5 mm, preferably 0.4 to 1.6 mm, and
- the grains of solid foamed substance have a size of 0.3 to 2.5 mm, preferably 0.4 to 1.6 mm.

17. Packaging in the form of a bag or the like comprising a plurality of confectionery products according to any one of claims 1 to 13 arranged in bulk, preferably without an individual packaging wrapper.
